Europäisches Patentamt

European Patent Office

Office européen des brevets

(19)

(11) Numéro de publication : **0 443 965 A1**

## (12) DEMANDE DE BREVET EUROPEEN

(21) Numéro de dépôt : **91420046.4**

(51) Int. Cl.⁵ : **A22C 17/00**

(22) Date de dépôt : **11.02.91**

(30) Priorité : **14.02.90 FR 9002148**

(43) Date de publication de la demande :
**28.08.91 Bulletin 91/35**

(84) Etats contractants désignés :
**AT BE CH DE DK ES GB GR IT LI LU NL SE**

(71) Demandeur : **EMSENS ANTOINE SARL**
**Z. A. Du Parc**
**F-42490 Fraisses (FR)**

(72) Inventeur : **Emsens, Michel**
**La Rivoire**
**F-42490 Fraisses (FR)**

(74) Mandataire : **Dupuis, François et al**
**Cabinet Laurent et Charras, 3 Place de**
**l'Hôtel-de-Ville, BP 203**
**F-42005 St. Etienne Cédex 1 (FR)**

(54) **Dispositif pour le chargement automatique de broches dans un support.**

(57)    Le dispositif est remarquable en ce qu'il comprend au moins un caisson (1) dans lequel sont disposées en vrac les broches (2), le fond dudit caisson étant constitué par un tiroir coulissant (3), monté en avec capacité de déplacement alternatif en translation, ledit tiroir (3) présentant des agencements (3a) aptes à recevoir d'une manière ordonnée les broches (2) en combinaison avec des moyens (7) - (8) montés dans le fond du caisson, de sorte qu'après poisitonnement des broches dans lesdits agencements, ces dernières sont soumises à l'action d'organes (5) aptes à assurer l'éjection desdites broches sélectionnées et ordonnées en dehors du tiroir (3) pour leur positionnement dans le support (6).

EP 0 443 965 A1

Jouve, 18, rue Saint-Denis, 75001 PARIS

FIG.1

# DISPOSITIF POUR LE CHARGEMENT AUTOMATIQUE DE BROCHES DANS UN SUPPORT

Plus particulièrement, l'invention concerne le chargement automatique des broches ou pics en bois dans des supports devant équiper les machines aptes à réaliser les brochettes de viandes, légumes, poissons. Par exemple, ces machines sont décrites dans les brevets français 2.537.401, 2.590.469, 2.605.871 et 2.610.186 dont le demandeur de la présente est également titulaire.

Pour l'essentiel, ces broches en bois sont disposées dans des agencements d'un support pour être enfoncées simultanément dans différentes couches de viande, légumes, poissons ou autres, contenues dans un bac. Il apparaît que la mise en place des broches dans les agencements du support, s'effectue d'une manière manuelle. Généralement, l'opérateur prend les broches et les positionne une à une dans les agencements du support. On conçoit que cette opération est longue et nécessite la présence d'une personne détachée exclusivement à cette tâche. A noter que les agencements du tiroir peuvent présenter différentes formes de réalisation. Par exemple, dans les machines décrites par les brevets précités, ces agencements sont constitués par une pluralité de tubes disposés d'une manière ordonnée en coorespondance avec des trous formés dans le fond du bac d'embrochage.

Pour tenter de remédier à ces inconvénients, on a proposé différentes solutions permettant d'automatiser la mise en place des broches. Cet état de la technique peut être illustré par l'enseignement des brevets français 2.634.982 et 2.642.938.

Par le document 2.634.982 on connaît une machine qui comporte à la base d'un magasin recevant les broches, un moyen de chargement automatique d'un moyen d'alignement desdites broches. Cependant, compte-tenu des moyens de mise en oeuvre, il apparait nécessaire de pratiquer une opération spéciale de préperçage préalablement au chargement automatique des broches.

La demande de brevet FR 2.642.938 constitue un état de la technique au sens de l'Article 54(3) de la CBE et a été publiée après la première priorité revendiquée pour la présente invention. Dans ce document, les broches sont disposées dans un conteneur dont le fond est équipé d'un tiroir coulissant. Ce tiroir comporte une série de gorges équidistantes aptes à recevoir chacune un seul pic. Le tiroir est assujetti à des moyens pour être déplacé par rapport au conteneur selon deux positions :

– dans une première position, la totalité des différentes gorges se trouvent à l'intérieur du conteneur pour correspondre au chargement des broches dans lesdites gorges.

– dans une seconde position, la totalité des différentes gorges équipées des broches se trouve à l'extérieur du conteneur pour que les broches soient soumises à l'action de tiges-poussoir.

Cette solution ne présente pas une fiabilité absolue, étant donné qu'elle ne permet pas de sélectionner les broches qui ne seraient pas rectilignes.

Le problème que se propose de résoudre l'invention est non seulement de pouvoir automatiser la mise en place des broches dans les agencements du support pour rationnaliser la fabrication des brochettes, mais également de sélectionner les broches qui ne seraient pas rigoureusement rectilignes et qui, par conséquent, seraient susceptibles d'entraver le bon fonctionnement du dispositif de chargement. Or, il arrive frequemment que les broches, qui sont généralement en bois, présentent des défauts d'aspects, compte-tenu de leur matière constitutive.

Pour résoudre un tel problème, il a été conçu et mis au point un dispositif apte à assurer le chargement automatique de broches dans un support et comprenant au moins un caisson dans lequel sont disposées en vrac les broches, le fond dudit caisson étant constitué par un tiroir présentant des rainures parallèles, aptes à recevoir les broches, lesdites rainures étant disposées en alignement avec des organes d'éjection pour être positionnées dans le support ; le tiroir est équipé de moyens permettant d'ordonner et de sélectionner les broches dans les rainures, en fonction de la position dudit tiroir qui est monté avec capacité de déplacement alternatif limité en translation, par rapport auxdits moyens.

Avantageusement, pour résoudre le problème posé d'éviter la superposition et ou la juxtaposition de plusieurs broches dans une même rainure, les moyens permettant d'ordonner et de sélectionner les broches sont constitués par des bandes aptes à obturer les rainures en fonction de la position du tiroir, les moyens étant constitués par des tiges disposées à proximité et d'une manière parallèle auxdites bandes, lesdites tiges étant entrainées positivement en rotation pour permettre le positionnement d'une seule broche dans chacune des rainures, lorsque ces dernières ne sont pas obturées par les bandes, la rotation desdites tiges permettant, lors du retour du tiroir en position d'obturation des rainures par les bandes, de refouler les éventuelles broches susceptibles d'être introduites inopinément dans les rainures.

Pour résoudre le problème posé d'évacuer la totalité des broches sélectionnées en vue de leur transfert automatique dans les agencements du support, les organes d'éjection sont constitués par une série de tiges coopérant avec chacune des rainures du tiroir, lesdites tiges étant accouplées à un moyen de commande pour être déplacées linéairement en translation et agir en poussée sur les broches positionnées dans lesdites rainures.

Un autre problème que se propose de résoudre l'invention est de trier les éventuelles broches qui ne seraient pas rigoureusement rectiligne en évitant de les sélectionner et de les positionner dans les rainures du tiroir.

Un tel problème est résolu en ce que le tiroir coulissant est, d'une part, accouplé à un organe de commande du type vérin à double effet et, d'autre part, soumis à l'action d'un système vibrateur pour soumettre ledit tiroir à des effets combinés de translation et de vibration dans un plan horizontal.

Pour résoudre le problème posé du transfert des broches sélectionnées, en regard des rainures du tiroir, est monté le support en combinaison avec des moyens aptes à permettre la mise en place automatique des broches sous l'effet de poussée des tiges d'éjection dans des agencements dudit support.

Avantageusement, le support est monté en regard du caisson avec capacité de déplacement en hauteur pour que les agencements du support soient positionnés successivement en regard des rainures du tiroir pour recevoir par rangée, les broches poussées par les tiges d'éjection.

Dans une forme de réalisation correspondant notamment aux caractéristiques des machines définies dans les brevets FR 2.537.401, 2.590.469, 2.605.871 et 2.610.186 dont le demandeur est également titulaire, le support présente plusieurs rangées de tubes dans lesquels sont introduites les broches, chaque rangée comprenant un nombre de tubes correspondant au nombre de rainures formées dans le tiroir.

L'introduction des broches dans les tubes du support s'effectue d'une manière automatique rangée par rangée.

Dans ce but, le support est monté à coulissement guidé en regard du caisson en étant assujetti à un organe du type vérin pour son déplacement vertical, ledit organe étant commandé en synchronisme avec les tiges d'éjection.

L'invention est exposée, ci-après plus en détail, à l'aide des dessins annexés, dans lesquels :

La figure 1 est une vue en perspective à caractère schématique montrant les principaux éléments du dispositif selon l'invention.

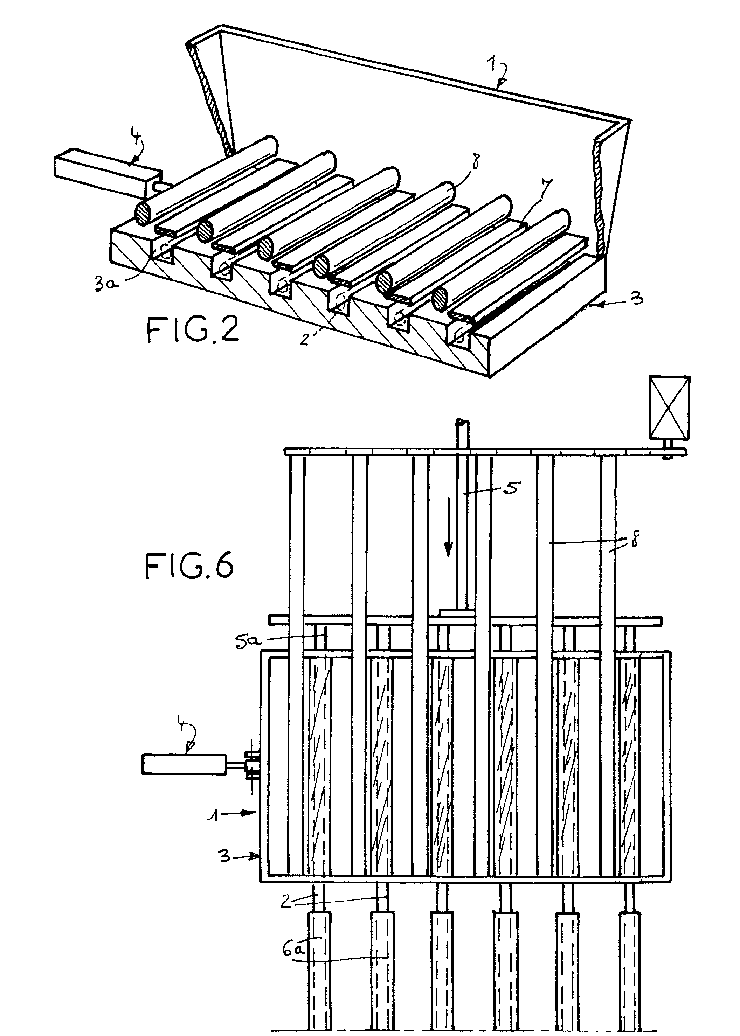

La figure 2 est une vue partielle et en coupe montrant les agencements du fond du caison pour la sélection des broches.

Les figures 3, 4, 5 et 6 illustrent, par des vues schématiques en coupe longitudinale et en plan, les principales phases de fonctionnement du dispositif pour la sélection et le chargement automatique des broches dans le support.

Le dispositif comprend convenablement monté sur un bâti support indépendant, ou bien sur un bâti faisant partie intégrante d'une machine conformée pour la fabrication automatique de brochettes, un caisson (1) conformé pour recevoir en vrac les broches (2). Généralement, mais non exclusivement, d'une manière connue, les broches (2) sont réalisées sous forme de pics en bois.

Suivant une caractéristique, le fond du caisson (1) reçoit à libre coulissement un tiroir coulissant (3) monté avec capacité de déplacement alternatif en translation en étant assujetti à un organe de commande (4). En outre, le tiroir (3) présente dans son épaisseur des agencements aptes à recevoir d'une manière ordonnée les broches (2) en combinaison avec des moyens montés dans le fond du caisson (1).

Les agencements et les moyens combinés du tiroir et du caisson sont déterminés pour permettre sous l'action d'organes pousseurs (5) l'éjection des broches sélectionnées (2) en dehors dudit tiroir pour leur positionnement dans un support (6) de tout type connu et approprié.

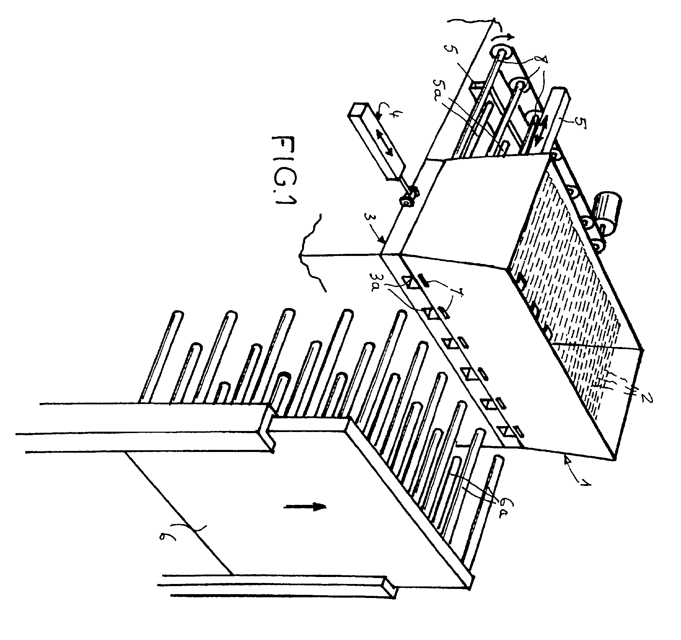

Dans ce but, les agencements du tiroir (3) sont constitués par une série de rainures parallèles débouchantes (3a). Ces rainures sont situées dans un plan horizontal. Comme le montre notamment la figure 1, en alignement avec les rainures (3a), sont montés les organes pousseurs (5) sous forme de tige (5a) dont le nombre correspond à celui desdites rainures. Les tiges (5a) sont commandées en translation pour être engagées dans chacune des rainures (3a) recevant les broches sélectionnées (2) au moyen d'un vérin par exemple.

Chacune des rainures (3a) est susceptible d'être obturée temporairement par des bandes (7) fixée dans le fond du caisson (1) en étant solidaire par exemple, de chacune des parois transversales dudit caisson.

Comme il sera indiqué dans la suite de la description, le déplacement limité en translation du tiroir (3), aura pour effet de déplacer les rainures (3a) par rapport aux bandes fixes (7) pour mettre lesdites rainures en communication ou non avec l'ensemble du volume interne du caisson correspondant à une phase de fonctionnement, soit pour la mise en place des broches, soit pour leur éjection.

D'une manière parallèle aux bandes (7), le fond du caisson reçoit une pluralité de tiges (8) entraînées positivement en rotation. Ces tiges (8) sont montées à proximité de chacune des bandes (7). Plus particulièrement, chaque bande (7) reçoit une tige (8) dont les génératrices sont très sensiblement tangentes à l'un des bords longitudinaux de la bande. Comme indiqué, ces tiges (8) sont entraînées positivement en rotation par tout moyen connu et approprié. Par exemple, les extrémités libres de ces tiges sont accouplées à l'extérieur du caisson (1), à un organe de transmission apte à assurer l'entraînement simultané de chacune des tiges.

Ces tiges (8), en combinaison avec les bandes, ont pour fonction essentielle de permettre le positionnement d'une manière sélective d'une seule broche (2) dans chaque rainure, en position de non-obturation desdites rainures par lesdites bandes.

Suivant une autre caractéristique, le tiroir coulissant (3) est accouplé à l'organe de commande du type vérin (4) à double effet pour assurer son déplacement alternatif en translation en vue de mettre en correspondance ou non les rainures et les bandes correspondant, comme indiqué, soit à une position d'obturation desdites rainures, soit à la position de remplissage de ces dernières par les broches (2). Avantageusement, le tiroir (3) est soumis à l'action d'un système vibrateur pour soumettre ledit tiroir (3) à des effets combinés de translation et de vibration dans un plan horizontal.

En regard des rainures (3a) du tiroir (3) est monté le support (6) destiné à recevoir les broches (2). Le support (6) est assujetti à des moyens aptes à permettre la mise en place automatique des broches sous l'effet de poussée des tiges d'éjection (5a) dans des agencements (6a) que présente ledit support. Par exemple, comme le montre la figure 1 notamment, le support (6) est monté en regard du caisson (1) avec capacité de déplacement en hauteur, pour assurer le positionnement successif des agencements (6a) dudit support en regard des rainures (3a) du tiroir (3). Le but recherché est d'assurer l'alimentation automatique en broche du support, rangée par rangée.

Dans le cas où les agencements (6a) du support (6) sont constitués par une pluralité de tubes disposés en rangées parallèles, le nombre de rainures (3a) correspond au nombre de tubes de chacune des rangées du support. Dans une forme de réalisation, le support (6) peut être monté à coulissement guidé entre deux colonnes verticales en étant soumis à l'action d'un organe de commande du type vérin pour positionner successivement chaque rangée de tubes (6a) en alignement avec les rainures (3a) du tiroir.

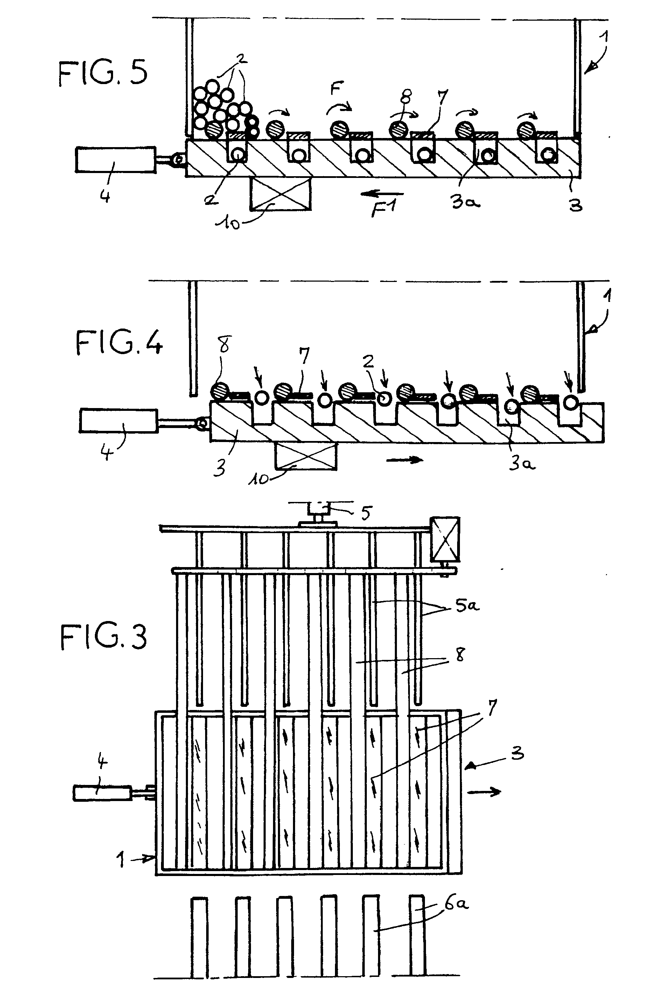

Il convient d'analyser le fonctionnement du dispositif de chargement des broches en se référant plus particulièrement aux figures 3, 4, 5 et 6 des dessins.

Au départ, le caisson est garni en totalité d'une pluralité de broches (2) disposées en vrac, d'une manière parallèle aux rainures (3a). Les rainures (3a) du tiroir (3) sont obturées par les bandes (7) (figure 3). Dans cette position, les tiges d'éjection (5a) sont en position escamotée.

On déplace le tiroir (3) par l'action du vérin (9) et du vibrateur (10), ce qui a pour effet de dégager les rainures (3a) des bandes (7). Simultanément à l'action de déplacement du tiroir (3), on commande en rotation les tiges (8) de manière à sélectioner les broches (2) pour que chacune des rainures soit garnie d'une seule broche (figure 4). En effet, la rotation des broches (8) permet lors du retour du tiroir (3) en position d'obturation des rainures (3a) sur les bandes (7), de refouler un éventuel pic susceptible de s'introduire inopinément dans l'une desdites rainures. A noter que le sens de rotation des broches (8) (flèche F) est

inverse du sens de déplacement du tiroir (3) (flèche F1) en position de retour (figure 5).

Le tiroir est alors ramené en position initiale ce qui a pour effet d'une manière concomitante d'obturer par les bandes (7) chacune des rainures (3a) garnies d'une broche (2) (figure 5). Il suffit ensuite d'agir sur l'organe de commande (5) pour assurer le déplacement des tiges d'éjection (5a) qui coopèrent avec chacune des rainures (3a) pour agir en poussée sur l'ensemble des broches (2) positionnées dans chacune desdites rainures. Sous l'action des tiges (5a), les broches (2) sont évacuées par rangée, en dehors du caisson, pour être introduites dans les agencements, par exemple les tubes (6a), du support (6) (figure 6).

Le support (6) est ensuite déplacé pour mettre une autre rangée de tubes vides (6a) en correspondance avec les rainures du tiroir en vue d'un autre cycle de chargement dans les mêmes conditions que celles indiquées ci-dessus. On procède donc par rangées successives jusqu'au remplissage complet du support.

Bien évidemment, les différents organes du dispositif aptes à assurer notamment le déplacement du tiroir, la rotation des tiges de sélection (8), l'entraînement linéaire des tiges d'éjection (5a) et le déplacement du support (6) sont commandés à synchronisme en combinaison avec des capteurs et des temporisations.

Les avantages ressortent bine de la description, en particulier on souligne le chargement automatique du support recevant les broches d'une manière sûre et efficace avec la possibilité de sélectionner les broches non rigoureusement rectilignes.

## Revendications

-1- Dispositif pour le chargement automatique de broches (2) dans un support (6), comprenant au moins un caisson (1) dans lequel sont disposées en vrac les broches (2), le fond dudit caisson étant constitué par un tiroir (3) présentant des rainures parallèles (3a), aptes à recevoir les broches (2), lesdites rainures étant disposées en alignement avec des organes d'éjection (5) pour être positionnées dans le support (6), caractérisé en ce que le tiroir (3) est équipé de moyens (7) et (8) permettant d'ordonner et de sélectionner les broches (2) dans les rainures (3a), en fonction de la position dudit tiroir qui est monté avec capacité de déplacement alternatif limité en translation, par rapport auxdits moyens (7) et (8).

-2- Dispositif selon la revendication 1, caractérisé en ce que les moyens (7) sont constitués par des bandes aptes à obturer les rainures (3a) en fonction de la position du tiroir (3), les moyens (8) étant constitués par des tiges disposées à proximité et d'une manière parallèle auxdites bandes (7), lesdites tiges (8) étant entrainées positivement en rotation pour permettre le positionnement d'une seule broche (2) dans chacune des rainures (3a), lorsque ces dernières ne sont pas obturées par les bandes (7), la rotation desdites tiges (8) permettant, lors du retour du tiroir (3) en position d'obturation des rainures (3a) par les bandes (7), de refouler les éventuelles broches susceptibles d'être introduites inopinément dans les rainures.

-3- Dispositif selon la revendication 1, caractérisé en ce que les organes d'éjection sont constitués par une série de tiges (5a) coopérant avec chacune des rainures (3a) du tiroir (3), lesdites tiges étant accouplées à un moyen de commande pour être déplacées linéairement en translation et agir en poussée sur les broches positionnées dans lesdites rainures.

-4- Dispositif selon la revendication 1, caractérisé en ce que le tiroir coulissant (3) est, d'une part, accouplé à un organe de commande (4) du type vérin à double effet et, d'autre part, soumis à l'action d'un système vibrateur (10) pour soumettre ledit tiroir à des effets combinés de translation et de vibration dans un plan horizontal.

-5- Dispositif selon la revendication 1, caractérisé en ce qu'en regard des rainures du tiroir recevant les broches (2), est monté le support (6) en combinaison avec des moyens aptes à permettre la mise en place automatique des broches sous l'effet de poussée des tiges d'éjection (5a) dans des agencements (6a) dudit support (6).

-6- Dispositif selon la revendication 5, caractérisé en ce que le support (6) est monté en regard du caisson (1) avec capacité de déplacement en hauteur pour que les agencements (6a) du support soient positionnés successivement en regard des rainures (3a) du tiroir pour recevoir par rangée, les broches (2) poussées par les tiges d'éjection (5a).

-7- Dispositif selon la revendication 6, caractérisé en ce que le support (6) présente plusieurs rangées de tubes (6a) dans lesquels sont introduites les broches, chaque rangée comprenant un nombre de tubes correspondant au nombre de rainures formées dans le tiroir.

-8- Dispositif selon l'une quelconque des revendications 1 à 7, caractérisé en ce que le support (6) est monté a coulissement guidé en regard du caisson (1) en étant assujetti à un organe du type vérin pour son déplacement vertical, ledit organe étant commandé en synchronisme avec les tiges d'éjection.

FIG.1

FIG.2

FIG.6

FIG. 5

FIG. 4

FIG. 3

Office européen
des brevets

## RAPPORT DE RECHERCHE EUROPEENNE

Numero de la demande

EP    91 42 0046

| | DOCUMENTS CONSIDERES COMME PERTINENTS | | |
|---|---|---|---|
| Catégorie | Citation du document avec indication, en cas de besoin, des parties pertinentes | Revendication concernée | CLASSEMENT DE LA DEMANDE (Int. Cl.5) |
| D,X | FR-A-2634982 (CARIEL) * page 5, ligne 1 - page 7, ligne 30 * | 1, 3, 5-7 | A22C17/00 |
| A | * page 9, ligne 7 - page 10, ligne 6 * * page 11, lignes 8 - 16 * --- | 2, 8 | |
| D,P, X | FR-A-2642938 (LE GOFF) * page 2, ligne 24 - page 5, ligne 6 * --- | 1, 3, 8 | |
| A | DE-A-2710137 (KOPPENS MASCHINEFABRIK) * page 15, alinéa 2 * * page 18, alinéa 2 * --- | 1, 2 | |
| A | DE-A-2851062 (TUNGL) * revendication 8 * --- | 4 | |
| A | US-A-3691608 (LOWRANCE) --- | | |
| A | US-A-4069960 (LOWRANCE) --- | | |
| A | DE-A-3820533 (POPAN) --- | | DOMAINES TECHNIQUES RECHERCHES (Int. Cl.5) |
| D,A | FR-A-2537401 (EMSENS) --- | | |
| A | US-A-3405422 (SICO) ------ | | A22C |

Le présent rapport a été établi pour toutes les revendications

| Lieu de la recherche | Date d'achèvement de la recherche | Examinateur |
|---|---|---|
| LA HAYE | 06 MAI 1991 | DE LAMEILLIEURE D. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
................................................................
& : membre de la même famille, document correspondant

EPO FORM 1503 03.82 (P0402)